# EUROPÄISCHE PATENTANMELDUNG

(11) **EP 1 045 601 A1**
(43) Veröffentlichungstag der Anmeldung: **18.10.2000**
(21) Anmeldenummer: 99810310.5
(22) Anmeldetag: 14.04.1999
(51) Int. Cl.: H04Q 7/34

(54) **Messung der Service-Qualität in Kommunikationsnetzwerken**

(71) Anmelder: Ascom AG, 3000 Bern 14 (CH)
(72) Erfinder: Wu, Raymond, CH-3145 Oberscherli (CH)
(74) Vertreter: Roshardt, Werner Alfred, Dipl.-Phys.

(57) **Zusammenfassung**

Beim vorliegenden Verfahren zur Messung der Service-Qualität in Kommunikationsnetzen werden spezielle Test-Verbindungen aufgebaut. Entweder von den einzelnen Teilnehmer-Endgeräten zu einem Test-Center oder von diesem Test-Center zu den einzelnen Teilnehmer-Endgeräten. Während dieser Test-Verbindungen werden verschiedene Messungen vorgenommen. So können z.B. die genaue Uhrzeit und die geographische Position eines Mobilfunktelefons zum Zeitpunkt der Messung, diverse Parameter der Luft-Schnittstelle, Fehlerraten und Feldstärken auf beiden Seiten der Verbindung wie auch die "up-" bzw. die "downlink"-Verbindungsqualität bestimmt werden. Erfindungsgemässe Qualitätsmessungen können somit unabhängig von den Telefonier-Gewohnheiten der Mobilfunkteilnehmer praktisch jederzeit und an jedem beliebigen Ort durchgeführt werden.

## Beschreibung

### Technisches Gebiet

Die Erfindung betrifft ein Verfahren zur Messung der Service-Qualität in Kommunikationsnetzwerken mittels Ermittlung und Aufzeichnung von Messdaten während einer Verbindung von oder zu einem Teilnehmer-Endgerät sowie anschliessender Übertragung dieser Messdaten an ein zentrales Test-Center. Weiter betrifft die Erfindung ein System zur Durchführung dieses Verfahrens.

### Stand der Technik

Die Überwachung und Vermessung von Kommunikationsnetzen ist wohl die wichtigste Voraussetzung, die Qualität solcher Netze und damit die Kundenzufriedenheit sicherzustellen. Für die Netzbetreiber wäre es deshalb wünschenswert, eine sowohl räumlich wie auch zeitlich möglichst lückenlose Überwachung des gesamten Netzes durchführen zu können.

Reklamationen von unzufriedenen Kunden stellen eine wichtige Möglichkeit dar, an Informationen über die Qualität der erbrachten Leistung zu bestimmten Zeiten an bestimmten Orten heranzukommen. Unglücklicherweise bleiben damit jedoch viele Mängel und Fehlleistungen unentdeckt, da sich viele Kunden scheuen, Reklamationen anzubringen. Zudem beruhen die so erhaltenen Informationen auf subjektiven Wahrnehmungen und ermöglichen keine objektive Beurteilung der Qualität.

Eine zweite Möglichkeit besteht darin, dass der Netzbetreiber selber Test-Anrufe tätigt um dabei die gewünschten Messdaten zu ermitteln. Hierzu werden spezielle Messstationen verwendet, die entweder an kritischen Punkten im Netz fest installiert, oder für mobile Einsätze z.B. auf einem Fahrzeug installiert und damit an praktisch jeden beliebigen Ort im Netz gebracht werden können. Mit Messungen dieser Art sind jedoch enorme Kosten verbunden, denn entsprechende Messstationen sind nicht nur teuer in der Herstellung und im Unterhalt, auch das Betreiben, d.h. das Aufstellen an bestimmten Orten und die Durchführung der Messungen sind arbeitsintensiv und verursachen hohe Kosten.

In der EP 0 431 956 A2 ist eine weitere Möglichkeit beschrieben, ein zellulares Funktelefon-Netz zu diagnostizieren. Dabei zeichnet die Basisstation einer Zelle die Position eines Mobilfunktelefons und gewisse Parameter der Funkverbindung wie z.B. die Signalqualität oder die Signalstärke auf, wenn eine Verbindung von diesem Mobilfunktelefon zur Basisstation hergestellt wird. Es ist auch möglich, dass das Mobilfunktelefon selber diese Daten sammelt und an die Basisstation weitergibt.

Allerdings sind auch bei diesem Vorgehen die gemessenen Daten statistisch nicht oder nur in geringem Masse aussagekräftig, denn eine Messung kann nur genau in dem Zeitpunkt und nur für den Standort durchgeführt werden, in bzw. an dem sich ein Mobilfunkteilnehmer befindet, wenn er von sich aus eine Verbindung aufbaut.

### Darstellung der Erfindung

Aufgabe der Erfindung ist es, ein Verfahren anzugeben, das es erlaubt, Messungen der Service-Qualität in Kommunikationsnetzen unabhängig von den Telefonier-Gewohnheiten der Mobilfunkteilnehmer praktisch jederzeit und an jedem beliebigen Ort durchzuführen.

Die Lösung der Aufgabe ist durch die Merkmale des Anspruchs 1 definiert. Um die gewünschten Messungen durchzuführen, werden spezielle Test-Verbindungen von einem beliebigen Teilnehmer-Endgerät (im folgenden Mobilfunktelefon genannt) zu einem bestimmten Ziel oder von einem zentralen System (im folgenden Test-Center genannt) zu einem beliebigen Mobilfunktelefon aufgebaut. Dazu muss sich das Mobiltelefon im Zustand "idle" befinden, d.h. es muss empfangs- bzw. sendebereit sein, aber es darf keine aktive Verbindung vom oder zum Mobilfunktelefon bestehen. Bei Geräten, die mehrere aktive Verbindungen gleichzeitig aufbauen können, muss dementsprechend mindestens eine Leitung frei und damit auch nur diese eine Leitung und nicht das ganze Gerät im Zustand "idle" sein. Der Aufbau einer Test-Verbindung und die anschliessende Durchführung der Messungen können automatisch ohne Eingriff des Mobilfunkteilnehmers erfolgen. Es ist sogar möglich, Messungen durchzuführen, ohne dass der Besitzer des Mobilfunktelefons davon Kenntnis erlangt.

Die Zahl der Mobilfunkteilnehmer ist heute schon enorm gross und wächst stetig weiter. Da jedes einzelne dieser Mobilfunktelefone zur Messung der gewünschten Netzwerkparameter und damit zur erfindungsgemässen Bestimmung der Service-Qualität des Netzes verwendet werden kann, resultiert die Möglichkeit einer praktisch flächendeckenden Überwachung und Vermessung des gesamten Netzes rund um die Uhr. Daraus lässt sich eine Fülle von aussagekräftigen und statistisch relevanten Messdaten gewinnen, die es erlaubt, die Schwächen und Lücken in der Versorgung des gesamten Netzgebietes präzise aufzuspüren, entsprechende Gegenmassnahmen einzuleiten und somit eine optimale Service-Qualität zu gewährleisten.

Der Zeitpunkt und die Anzahl der Test-Verbindungen zu einem bestimmten Mobilfunktelefon kann von verschiedenen Faktoren abhängig gemacht werden. Wenn das Test-Center beispielsweise über gleich viele Verbindungsmöglichkeiten verfügt wie Mobilfunkteilnehmer im zu versorgenden Gebiet vorhanden sind, kann natürlich jederzeit zu jedem der Mobilfunktelefone und beliebig oft hintereinander eine Test-Verbindung aufgebaut werden, vorausgesetzt, das Mobilfunktelefon befindet sich im Zustand "idle". Sind hingegen weniger Anschlüsse als Mobilfunkteilnehmer vorhanden, wird das nächste Mobilfunktelefon, zu oder von dem eine Test-Verbindung aufgebaut wird, unter Berücksichtigung verschiedener Kriterien bestimmt. So können beispielsweise die geographische Position des Mobilfunktelefons, die seit der letzten Test-Verbindung verstrichene Zeit, die aktuelle Uhrzeit oder auch die momentane Auslastung des gesamten Netzwerkes oder gewisser Teile davon einen Einfluss darauf haben.

In diesem Zusammenhang ist auch zu erwähnen, dass die Erfindung keineswegs beschränkt ist auf Verbindungen, die speziell zu Testzwecken aufgebaut werden. Selbstverständlich können auch während einer bestehenden Verbindung vom oder zum Mobilfunktelefon die gewünschten Messungen durchgeführt werden, ohne dass der Benutzer dadurch in irgend einer Weise gestört wird. Bei einer starken Netzauslastung erscheint es sogar sinnvoll, bestehende Sprechverbindungen zur Messung zu verwenden. Erstens müssen dann keine zusätzlichen Test-Verbindungen aufgebaut werden, die das Netz noch mehr belasten, und zweitens sind Messdaten von Gebieten oder Zeiten mit starker Netzauslastung von besonderem Interesse für den Netzbetreiber.

Damit die Verwendung eines Mobilfunktelefons zur Messung der Service-Qualität des Netzwerkes für dessen Besitzer keine Nachteile mit sich bringt, sollte insbesondere beachtet werden, dass er in der Benutzung seines Telefons nicht eingeschränkt wird. Ausser für den Fall, dass schon eine von ihm selber gewünschte Sprechverbindung besteht, muss er also jederzeit und unabhängig vom Zustand des Mobilfunktelefons einen eingehenden Anruf beantworten oder selber einen Anruf tätigen können. Dies gilt insbesondere auch dann, wenn eine erfindungsgemässe Test-Verbindung vom oder zum Mobilfunktelefon besteht. Um dies zu gewährleisten, wird das Mobilfunktelefon erfindungsgemäss mit einer entsprechenden Vorrichtung ausgestattet, die eine allfällige Test-Verbindung und eine laufende Messung sofort unter- bzw. abbricht, wenn der Verbindungswunsch eines anderen Mobilfunkteilnehmers eintrifft oder wenn der Benutzer selber z.B. per Tastendruck, per Aufklappen des Mobilfunktelefons oder auf eine andere Art und Weise einen Verbindungswunsch anmeldet.

Eine bevorzugte Ausführungsform der Erfindung besteht darin, dass die zu messenden Daten vom Mobilfunktelefon ermittelt und aufgezeichnet werden. Danach werden die Messdaten zu einem Test-Center übermittelt, das diese Daten schliesslich auswertet. Wird nun die Test-Verbindung durch einen eingehenden oder abgehenden Verbindungswunsch unterbrochen bevor oder während die Messdaten ans Test-Center übermittelt werden, bleiben die Messdaten solange gespeichert, bis sich das Mobilfunktelefon wieder im Zustand "idle" befindet und die nächste Test-Verbindung aufgebaut werden kann, damit sämtliche bzw. die noch verbleibenden Messdaten zum Test-Center übertragen werden können.

Wann die Übertragung der Messdaten vom Mobilfunktelefon zum Test-Center erfolgen soll, ist frei wählbar. Eine der Möglichkeiten ist die Übertragung der Daten gleich anschliessend an eine Messung über die bestehende Test-Verbindung selber, oder es wird zu einem späteren Zeitpunkt eine eigene Test-Verbindung dafür aufgebaut. Eine weitere Möglichkeit besteht darin, die Daten nach der Messung via einen öffentlichen Nachrichten-Service ans Test-Center zu schicken. E-Mail via Internet-Verbindung oder auch SMS (short message service) beim GSM (Global System Mobile) sind Beispiele dafür.

Es ist aber auch möglich, dass die Messdaten aller Messungen über einen bestimmten Zeitraum hinweg vom Mobilfunktelefon gesammelt, abgespeichert und danach auf einen beliebigen Datenträger übertragen werden. Dieser wird dann ans Test-Center übermittelt, wo die Messdaten anschliessend ausgelesen und weiterverarbeitet werden können.

Frei wählbar ist aber nicht nur der Zeitpunkt, sondern auch die Art der Datenübertragung. Dazu kann ein beliebiger Übertragungskanal, wie z.B. der Sprach- oder auch der Datenkanal digitaler Verbindungen benutzt werden. Auch Verbindungen auf Basis der schon erwähnten öffentlichen Nachrichten-Services wie SMS oder E-Mail sind dazu geeignet.

Um die Übertragung der Messdaten vom Mobilfunktelefon zum Test-Center zu umgehen bzw. einzusparen oder um gewisse Messungen überhaupt zu ermöglichen, können alle oder ein Teil der Messdaten auch vom Test-Center selber ermittelt und aufgezeichnet werden.

Eine erfindungsgemässe Test-Verbindung kann vom Mobilfunktelefon aus aufgebaut werden. Es ist jedoch anzumerken, dass zur Messung der gewünschten Daten nicht notwendigerweise eine Verbindung vom Mobilfunktelefon zum Test-Center bestehen muss. Im Prinzip reicht eine Verbindung vom Mobilfunktelefon zu einem beliebigen Ziel aus. Vorteilhaft ist jedoch eine Verbindung zu einem öffentlichen Telefon-Service wie der "sprechenden Uhr", der "Wettervorhersage" oder dem "Strassenzustands-Bericht", da bei solchen Verbindungen Sprachdaten übertragen werden, die zur Messung der Sprachqualität der Verbindung von diesem Ziel zum Mobilfunktelefon (die sogenannte "downlink"-Verbindungsqualität) verwendet werden können. Zur Messung der Verbindungsqualität ist jedoch nicht zwingend die Übertragung eines Sprachsignals notwendig, auch die Übertragung eines Datensignals über die entsprechende Verbindung ermöglicht eine solche Messung.

Um eine möglichst genaue Messung der "downlink"-Verbindungsqualität zu erreichen, wird mit Vorteil eine Verbindung zum immer gleichen, im Voraus bekannten Ziel aufgebaut, in welchem eine vordefinierte und auch dem Mobilfunktelefon bekannte Sprachsequenz gespeichert ist, die während einer Test-Verbindung zum Mobilfunktelefon gesendet wird und dort ausgemessen werden kann. Dieses Ziel ist häufig das Test-Center selber, kann aber auch ein beliebiges anderes Gerät mit den entsprechenden Eigenschaften sein. Erfolgt die Messung der Verbindungsqualität anhand eines Datensignals statt eines Sprachsignals, kann anstelle einer vordefinierten Sprachsequenz auch eine vordefinierte Datensequenz zum Empfänger übermittelt werden. Wenn im folgenden daher von einem Sprachsignal bzw. einer Sprachsequenz die Rede ist, soll darunter stets auch ein Datensignal bzw. eine Datensequenz verstanden werden.

Neben der Verbindungsqualität zum Mobilfunktelefon interessiert aber auch die Verbindungsqualität vom Mobilfunktelefon zum Test-Center bzw. zur Basisstation ("uplink"-Verbindungsqualität). Um diese zu messen muss auch eine Sprachsequenz in dieser Richtung gesendet werden, damit sie im Test-Center bzw. der Basisstation empfangen und analysiert werden kann. Auch in diesem Fall ist dies vorteilhafterweise eine vordefinierte und im Mobilfunktelefon gespeicherte Sprachsequenz, die am Empfangsort bekannt ist.

Wird die Test-Verbindung vom Test-Center aus aufgebaut, ist das Ziel notwendigerweise das Mobilfunktelefon, da ja die zu messenden Daten am Ort des Mobilfunktelefons zum Zeitpunkt der Verbindung bestimmt werden sollen. Es ist jedoch auch denkbar, dass das Test-Center nicht selber eine Test-Verbindung aufbaut, sondern eine andere Station dazu veranlasst, ihrerseits eine Test-Verbindung zum Mobilfunktelefon aufzubauen. Dort können dann die gewünschten Messungen vorgenommen und die Messdaten danach zum Test-Center übertragen werden.

Erfolgt der Aufbau einer Test-Verbindung durch das Test-Center, muss im Mobilfunktelefon eine Möglichkeit vorhanden sein, einen eingehenden Anruf des Test-Centers von anderen eingehenden Anrufen zu unterscheiden. Ein erfindungsgemässes Mobilfunktelefon weist daher Mittel auf, die Nummer der anrufenden Partei (calling party number) zu identifizieren und einen Anruf des Test-Centers nicht dem Mobilfunkteilnehmer zu signalisieren, sondern automatisch eine Test-Verbindung aufzubauen und die Ermittlung bzw. Aufzeichnung der Messdaten durchzuführen. Stellt das Mobilfunktelefon hingegen fest, dass der Verbindungswunsch nicht vom Test-Center oder von einem zur Durchführung von Tests bestimmten Netzelement stammt, wird der Verbindungswunsch wie ein ganz normaler Telefonanruf behandelt und dem Mobilfunkteilnehmer dementsprechend signalisiert. Dieser hat dann die Möglichkeit, den Anruf abzulehnen oder ihn entgegenzunehmen und das Gespräch zu führen.

In einer bevorzugten Ausführungsform der Erfindung wird vor jedem Aufbau einer Test-Verbindung, ob dieser nun durch das Mobilfunktelefon oder durch das Test-Center erfolgt, geprüft, ob schon eine aktive Verbindung vom oder zum Mobilfunktelefon besteht. Ist dies der Fall, wird der Verbindungsaufbau sofort wieder abgebrochen bzw. der Verbindungswunsch des Test-Centers abgewiesen. Auch während dem Bestehen einer Test-Verbindung wird vom Mobilfunktelefon geprüft, ob ein Verbindungswunsch des Mobilfunkteilnehmers oder eines externen Anrufers anliegt. Falls ja, wird die laufende Messung der gewünschten Daten sofort abgebrochen und die bestehende Test-Verbindung unterbrochen und der Mobilfunkteilnehmer kann, ohne dass er davon etwas bemerkt, mit dem eigenen Verbindungsaufbau fortfahren bzw. den eingehenden Anruf entgegennehmen.

Selbstverständlich ist es keineswegs zwingend, dass der Mobilfunkteilnehmer nichts von einer bestehenden oder im Aufbau befindlichen Test-Verbindung erfahren darf. Ebensogut kann eine Test-Verbindung dem Besitzer auch am oder durch das Mobilfunktelefon signalisiert werden.

An dieser Stelle soll noch genauer auf den Begriff des Test-Centers eingegangen werden. Wie weiter oben schon dargelegt, führt das Test-Center einige wichtige Aufgaben im Zusammenhang mit der Erfindung aus. Es entscheidet darüber, zu welchem Mobilfunktelefon und mit welcher Häufigkeit Test-Verbindungen aufgebaut werden sollen, baut selber solche Test-Verbindungen auf, sendet oder empfängt spezielle Sprachsequenzen zur Analyse der Verbindungsqualität, führt die Messdatenerfassung durch, sammelt die an den verschiedenen Orten erfassten Messdaten und wertet diese schliesslich aus. Anstatt alle diese Aufgaben an einem Ort im Netz zu konzentrieren ist es natürlich auch möglich, dass im Netz mehrere solcher Test-Center existieren. Diese können entweder alle gleichwertig sein, d.h. alle dieselben Aufgaben ausführen, oder je nach Bedarf oder Einstellung einzelne oder mehrere dieser Aufgaben übernehmen. Beispielsweise könnten in einem Mobilfunknetz drei Test-Center A, B und C existieren. Vom Test-Center A werden die Test-Verbindungen aufgebaut, die vordefinierten Sprachsequenzen ausgesendet bzw. empfangen und gewisse Messdaten selbständig erfasst. Test-Center B entscheidet, wann und zu welchen Mobilfunktelefonen Test-Verbindungen aufgebaut werden sollen und sammelt die vom Test-Center A und den Mobilfunktelefonen erfassten Messdaten. Im Test-Center C erfolgt schliesslich die Auswertung der gesammelten Daten.

Die Messdaten, die während einer Messung ermittelt und aufgezeichnet werden, können aus allen erdenklichen, messbaren Grössen in einem Mobilfunknetz bestehen. Vorteilhafterweise umfassen die Messdaten Informationen darüber, ob ein Verbindungsaufbau erfolgreich war oder nicht, über die Feldstärke der auf beiden Seiten empfangenen Signale, über die "up-" bzw. "downlink"-Verbindungsqualität, über die Fehlerhäufigkeit der Datenrahmen, in denen die Messdaten übertragen werden (engl.: frame error rate) bzw. jede andere Art der Fehlerhäufigkeit oder -wahrscheinlichkeit der übertragenen Signale, über die genaue Uhrzeit im Zeitpunkt der Messung, über die genaue geographische Position des Mobilfunktelefons im Zeitpunkt der Messung und über Art, Inhalt, Anzahl und Ziel bzw. Ursprungsort (sowie ev. weitere Informationen) der gesendeten bzw. empfangenen Signalisierungs-Nachrichten. Im Fall der Übertragung von Daten- statt Sprachsignalen können noch weitere Parameter wie die Bitfehlerrate, die zur Übertragung einer Datensequenz benötigte Übertragungszeit, die effektive Übertragungsrate (z.B. in Bytes pro Sekunde) oder die Anzahl der wegen Übertragungsfehlern nochmals zu sendenden Datenblocks ermittelt werden.

Die Analyse von Signalen, die vom Mobilfunktelefon empfangen werden, kann neben den Signalen vom Test-Center oder von der Basisstation der eigenen Zelle auch andere Signale umfassen. Beispielsweise können auch Signale der Basisstationen benachbarter Funkzellen analysiert werden. Daraus lassen sich dann wiederum andere Messgrössen bestimmen. Anhand der Verzögerungen bei der Signalübertragung vom bzw. zum Mobilfunktelefon lässt sich beispielsweise dessen geographische Position bestimmen. Dazu werden vom Mobilfunktelefon Signale zu den verschiedenen Basisstationen, und von diesen wieder zum Mobilfunktelefon zurückgesendet. Aus den Signallaufzeiten lassen sich anschliessend die Distanzen zu den verschiedenen Basisstationen berechnen und aus diesen wiederum auf die geographische Position des Mobilfunktelefons schliessen. Weiter können auch stationäre Sender/Empfänger in solche Messungen einbezogen werden.

Muss die geographische Position des Mobilfunktelefons möglichst genau bekannt sein, kann dazu auch ein GPS (global positioning system) verwendet werden, das entweder direkt im Mobilfunktelefon integriert oder auf beliebige Art und Weise damit verbunden wird.

Die erwähnten Signalisierungs-Nachrichten dienen dazu, Informationen von einem beliebigen Element eines Kommunikationsnetzes (stationäres Telefon, Mobilfunktelefon, Telefonzentrale, Test-Center etc.) zu einem anderen beliebigen Element zu übermitteln. Beispielsweise könnten die Messdaten wie auch die "calling party number", die zur Identifikation der anrufenden Partei benötigt wird, mittels Signalisierungs-Nachrichten zum gewünschten Ziel übermittelt werden.

Eine weitere bevorzugte Ausführungsform der Erfindung besteht darin, dass die Funktionsweise des Mobilfunktelefons im laufenden Betrieb von aussen beeinflusst werden kann. Dies geschieht beispielsweise mit Hilfe von Steuersignalen, die mit einer Signalisierungs-Nachricht vor, während oder nach einer Test-Verbindung vom Test-Center zum Mobilfunktelefon gesendet werden. Damit können auf einfache Art und Weise z.B. bestimmte Start/Stop-Bedingungen für die Messung oder die gewünschte Art der Datenübertragung festgelegt werden. Auch ein Software-Update im Mobilfunktelefon kann damit sehr einfach realisiert werden.

Ein System zur Durchführung der erfindungsgemässen Messung der Service-Qualität in einem zellularen Kommunikationsnetz beinhaltet mindestens ein Test-Center und mehrere Mobilfunkteilnehmer mit einem Mobilfunktelefon. In einem solchen Kommunikationsnetz sind bekanntermassen aber auch meist weitere Elemente vorhanden wie normale Telefonzentralen oder sogenannte "Operating Systems", welche z.B. das gesamte Netz-Management abwickeln. Diese Elemente spielen im Zusammenhang mit der Erfindung jedoch nur insofern eine Rolle, als solche Elemente oder Teile davon mit einem erfindungsgemässen Test-Center identisch sein können.

Die zur Durchführung der Messungen verwendeten Teilnehmer-Endgeräte sind handelsübliche Mobilfunktelefone, die mit Mitteln zur Erfassung, Aufzeichnung und Übertragung der gewünschten Messdaten ergänzt wurden.

Zusätzlich beinhaltet ein Mobilfunktelefon eines erfindungsgemässen Kommunikationssystems auch Mittel, die dazu dienen, bei einem eingehenden Verbindungswunsch zwischen einer Test-Verbindung von einem Test-Center und einer normalen Sprechverbindung einer Drittpartei zu unterscheiden und darauf entsprechend zu reagieren. Ein Verbindungswunsch von einem Test-Center wird dem Benutzer nicht signalisiert, sondern vom Mobilfunktelefon als solcher erkannt, akzeptiert und als Test-Verbindung aufgebaut. Anschliessend werden die gewünschten Messungen durchgeführt, die Messdaten aufgezeichnet und an das Test-Center weitergeleitet. Ein normaler Verbindungswunsch einer Drittpartei wird dem Mobilfunkteilnehmer wie gewohnt signalisiert, worauf dieser den Anruf bei Bedarf entgegennehmen oder unbeantwortet lassen kann.

Damit der Besitzer eines Mobilfunktelefons durch die automatisch aufgebauten Test-Verbindungen und die durchgeführten Messungen in der Benutzung seines Gerätes nicht eingeschränkt wird, weist das Mobilfunktelefon auch Mittel auf, die es diesem ermöglichen, eingehende oder abgehende Verbindungswünsche zu erkennen, laufende Messungen sofort abzubrechen und die Test-Verbindungen sofort zu beenden, damit die gewünschte Sprechverbindung vom Besitzer aufgebaut werden kann.

Ein weiterer Vorteil des erfindungsgemässen Verfahrens liegt darin, dass auch Parameter gemessen werden können, die vom gesamten Weg einer Test-Verbindung abhängen wie z.B. die "end-to-end" Verbindungsqualität zwischen einem Mobilfunktelefon und einem Test-Center, unabhängig davon, über wieviele Basisstationen oder andere Netzelemente die Verbindung geführt wird.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Ein Diagramm einer einzelnen Zelle eines zellularen Mobilfunknetzes,
- Fig. 2: ein Diagramm eines zellularen Mobilfunknetzes,
- Fig. 3: ein Flussdiagramm der Ablaufsteuerung bei der Durchführung von Messungen der Verbindungsqualität für Messungen, bei denen die Test-Verbindung vom Test-Center zum Mobilfunktelefon aufgebaut werden,
- Fig. 4: ein Flussdiagramm der Ablaufsteuerung bei der Durchführung von Messungen der Verbindungsqualität für Messungen, bei denen die Test-Verbindung vom Mobilfunktelefon zum Test-Center aufgebaut werden.

Grundsätzlich sind in den Figuren gleiche Teile mit gleichen Bezugszeichen versehen.

### Wege zur Ausführung der Erfindung

Das folgende Ausführungsbeispiel erläutert, wie eine erfindungsgemässe Messung der Service-Qualität in einem Kommunikationsnetz durchgeführt wird.

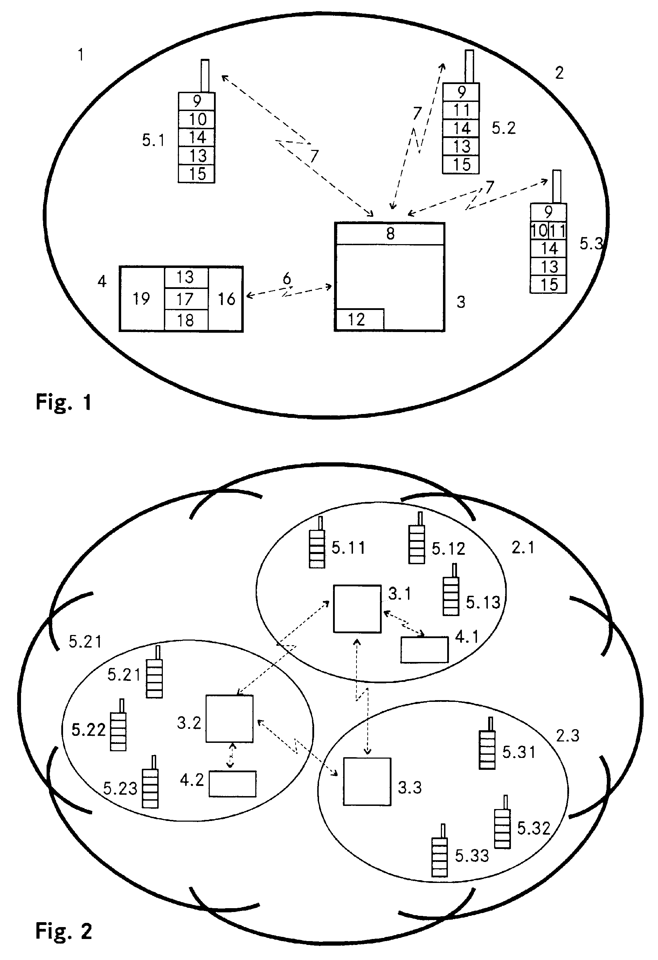

Figur 1 zeigt skizzenhaft eine einzelne Zelle 2 eines zellularen Mobilfunknetzes 1. Diese Zelle 2 umfasst eine Basisstation 3, ein Test-Center 4 und mehrere Mobilfunktelefone 5.1, 5.2, 5.3. Zwischen dem Test-Center 4 und der Basisstation 3 besteht eine Kommunikationsverbindung 6. Hierbei ist darauf hinzuweisen, dass diese Verbindung über ein beliebiges Netzwerk (Festnetz und/oder Mobilfunknetz) realisiert sein kann. Ebenso ist es möglich, dass das Test-Center nicht direkt, sondern über andere Netzwerke mit der Basisstation verbunden ist.

Die Mobilfunktelefone 5.1, 5.2, 5.3 stehen in ständigem Funkkontakt 7 mit der Basisstation 3, um bei ein- oder abgehenden Anrufen die gewünschte Verbindung möglichst rasch herstellen zu können. Die Basisstation 3 und die Mobilfunktelefone 5.1, 5.2, 5.3 verfügen dazu je über eine Sende-/Empfangs-Einheit 8 bzw. 9. In die Basisstation ist zusätzlich eine Vorrichtung "sprechende Uhr" 12 integriert, welche 24 Stunden am Tag die genaue, aktuelle Uhrzeit ansagt. Es ist aber auch möglich, die Vorrichtung "sprechende Uhr" 12 nicht in die Basisstation zu integrieren, sondern an einem beliebigen Ort des Netzwerkes zu plazieren. Voraussetzung ist jedoch, dass sie sich über ein beliebiges Fest- oder Mobilfunknetz erreichen lässt.

Jedes der Mobilfunktelefone 5.1, 5.2, 5.3 weist auch eine Management-Einheit auf, welche allerdings in zwei verschiedenen Ausführungen (für eingehende bzw. für abgehende Test-Verbindungen) vorliegen kann. Ein Mobilfunktelefon 5.1 weist z.B. eine Management-Einheit für eingehende Test-Verbindungen 10 und ein anderes Mobilfunktelefon 5.2 weist eine Management-Einheit für abgehende Test-Verbindungen 11 auf, wobei in einem Mobilfunktelefon 5.3 auch beide Management-Einheiten 10, 11 integriert sein können.

Zur Messung der "uplink"-Verbindungsqualität verfügt jedes der Mobilfunktelefone 5.1, 5.2, 5.3 über eine Vorrichtung, in welcher eine vordefinierte Sprachsequenz 13 gespeichert ist. Zur Durchführung der Messungen und zur Speicherung der Messdaten sind in jedem Mobilfunktelefon zwei entsprechende Schaltungsanordnungen, d.h. eine Messeinheit 14 und ein Speicher 15 integriert.

Auch das Test-Center 4 verfügt über eine Sende-/Empfangs-Einheit 16, eine Vorrichtung mit der vordefinierten, abgespeicherten Sprachsequenz 13 sowie drei Schaltungsanordnungen: eine Messeinheit 17, einen Speicher 18 sowie eine Auswertungs- und Steuereinheit 19.

Jedes der erwähnten Netzelemente eines Mobilfunknetzes (Funkzelle, Basisstation, Test-Center, Mobilfunktelefon) kann neben den hier erwähnten noch weitere Komponenten enthalten, welche allerdings im Zusammenhang mit der Erfindung von untergeordneter Bedeutung sind und deshalb hier nicht explizit aufgeführt werden.

Das Test-Center 4 ist ausgelegt, um Test-Verbindungen zu den einzelnen Mobilfunktelefonen 5.1, 5.2, 5.3 aufzubauen oder von den Mobilfunktelefonen 5.1, 5.2, 5.3 gewünschte Test-Verbindungen zu akzeptieren bzw. von einem der Mobilfunktelefone 5.1, 5.2, 5.3 in eigener Regie, während Test-Verbindungen zu anderen Stationen im Netz, gemessene Daten lediglich zu empfangen und auszuwerten.

Im ersten Fall entscheidet die Auswertungs- und Steuereinheit 18 des Test-Centers 4 in Abhängigkeit gewisser Parameterwerte, wann, mit welcher Häufigkeit und zu welchem Mobilfunktelefon 5.1, 5.2, 5.3 dies geschehen soll. Diese Parameter können z.B. die geographische Position des Mobilfunktelefons 5.1, 5.2, 5.3, die seit der letzten Test-Verbindung verstrichene Zeit, die aktuelle Uhrzeit oder auch die momentane Netzauslastung sein. Soll eine Test-Verbindung zu einem bestimmten Mobilfunktelefon 5.1 aufgebaut werden, führt das Test-Center 4 einen normalen Verbindungsaufbau via Basisstation 3 durch. Das Mobilfunktelefon 5.1 empfängt den eingehenden Ruf. Die Management-Einheit für eingehende Test-Verbindungen 10 identifiziert den Anrufer anhand der "calling party number" als Test-Center 4, akzeptiert die Test-Verbindung und veranlasst die Messdatenerfassung durch die Messeinheit 14 sowie die Messdatenaufzeichnung der Messergebnisse im Speicher 15. Diese umfassen beispielsweise die "downlink"-Verbindungsqualität, welche mit Hilfe der vom Test-Center 4 während der Test-Verbindung zum Mobilfunktelefon 5.1 gesendeten Sprachsequenz 13 ermittelt wird, die Feldstärken der Signale der Basisstationen sowohl der benachbarten als auch der eigenen Zelle 2, die Fehlerrate der empfangenen Signale, die geographische Position des Mobilfunktelefons 5.1 oder auch die aktuelle Uhrzeit. Gleichzeitig werden auch von der Messeinheit 17 im Test-Center 4 gewisse Messdaten erfasst und im Speicher 18 abgelegt: z.B. ob der Verbindungsaufbau erfolgreich war oder nicht, die anhand der vom Mobilfunktelefon 5.1 während der Test-Verbindung zum Test-Center 4 gesendeten Sprachsequenz 13 ermittelte "uplink"-Verbindungsqualität wie auch die Fehlerrate der empfangenen Signale. Anschliessend an die Messungen werden die vom Mobilfunktelefon gemessenen und im Speicher 15 abgelegten Daten ans Test-Center 4 gesendet und in dessen Speicher 18 abgelegt. Danach wird die Test-Verbindung wieder abgebaut. Die Auswertung der Daten kann zu einem beliebigen späteren Zeitpunkt durch die Auswertungs-Einheit 19 des Test-Centers 4 geschehen.

Im zweiten Fall erfolgt der Aufbau einer Test-Verbindung wie erwähnt entweder zum Test-Center 4 selber oder zu einer anderen Station im Netz. Im vorliegenden Beispiel nützt das Mobilfunktelefon 5.2 den Service "sprechende Uhr" und baut eine Test-Verbindung zur entsprechenden Vorrichtung 12 in der Basisstation 3 auf. Sobald die Test-Verbindung steht, werden die notwendigen Messungen durch die Messeinheit 14 des Mobilfunktelefons durchgeführt und die gewünschten Messdaten im Speicher 15 des Mobilfunktelefons abgespeichert. Die "downlink"-Verbindungsqualität wird durch die Analyse des von der Einheit "sprechende Uhr" 12 ausgesandten Sprachsignals bestimmt. (Die Bestimmung der "uplink"-Verbindungsqualität entfällt bei diesem Beispiel.) Nach Beendigung der Messdatenaufzeichnung wird die Test-Verbindung zur "sprechenden Uhr" beendet und eine neue Verbindung zum Test-Center 4 aufgebaut, damit die Messdaten aus dem eigenen Speicher 15 in den Speicher 18 des Test-Centers übertragen werden können.

Figur 2 zeigt skizzenhaft ein zellulares Mobilfunknetz 1 mit mehreren Zellen 2.1, 2.2, 2.3, einer Basisstation pro Zelle 3.1, 3.2, 3.3, zwei verschiedenen Test-Centern 4.1, 4.2 in zwei verschiedenen Zellen und mehreren Mobilfunktelefonen 5.11, 5.12, 5.13, 5.21, 5.22, 5.23, 5.31, 5.32, 5.33 pro Zelle. Die Basisstationen 3.1, 3.2, 3.3 stehen untereinander in Verbindung und die beiden Test-Center 4.1, 4.2 stehen jeweils mit der Basisstation 3.1, 3.2 der Zelle in Verbindung, in der es sich befindet.

Das erste Test-Center 4.1 dient dabei lediglich dazu, Test-Verbindungen aufzubauen (initiiert vom Test-Center 4.1 oder vom Mobilfunktelefon 5.11, 5.12, 5.13, 5.21, 5.22, 5.23, 5.31, 5.32, 5.33) und die Messungen zu ermöglichen bzw. selber durchzuführen. Im Anschluss an eine Messung werden sowohl die vom ersten Test-Center 4.1, als auch die vom Mobilfunktelefon 5.11, 5.12, 5.13, 5.21, 5.22, 5.23, 5.31, 5.32, 5.33 erfassten Daten zum zweiten Test-Center 4.2 übermittelt, wo die Daten gespeichert und ausgewertet werden können.

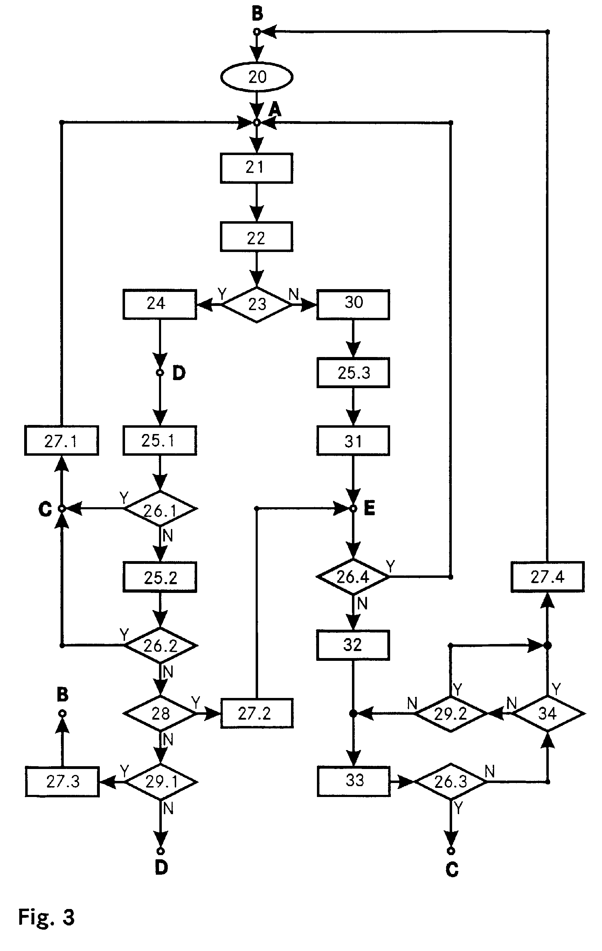

Figur 3 zeigt ein Flussdiagramm einer Management-Einheit für eingehende Test-Verbindungen 10 (also aufgebaut vom Test-Center zum Mobilfunktelefon), wie sie z.B. im Mobilfunktelefon 5.1 in der Zelle 2 des zellularen Netzwerkes 1 integriert ist. Die Realisierung einer solchen Management-Einheit kann sowohl als Schaltungsanordnung als auch als Steuerprogramm erfolgen.

Ausgangspunkt ist der Zustand "idle" 20 des Mobilfunktelefons 5.1. Das Gerät ist also eingeschaltet und empfangs- bzw. sendebereit (Punkt A). In diesen Zustand gelangt das Mobilfunktelefon 5.1, indem es z.B. eingeschaltet wird oder ein Telefongespräch beendet und die Sprechverbindung abgebaut wird (Punkt B). Wird im Zustand "idle" 20 ein eingehender Anruf registriert 21, wird zunächst die "calling party number" analysiert 22 und festgestellt, woher der Ruf kommt. Ein Entscheider 23 (die Richtung, in der von einem Entscheider aus jeweils weitergefahren wird, ist mit "Y" bezeichnet, wenn die gestellte Bedingung erfüllt ist und für den Fall, dass die Bedingung nicht erfüllt ist, ist sie mit "N" bezeichnet) leitet den Anruf je nach Urheber weiter: stammt der Ruf vom Test-Center, wird er akzeptiert und eine Test-Verbindung aufgebaut 24, ohne dies dem Besitzer des Mobilfunktelefons 5.1 zu signalisieren (Punkt D). Danach wird mit der Messdatenerfassung und -aufzeichnung 25.1 begonnen, wobei auch eine vordefinierte Sprachsequenz 13 zwecks Messung der "uplink"-Verbindungsqualität zum Test-Center 4 gesandt werden kann. Zwischen oder während den einzelnen Messungen erfolgt im Entscheider 26.1 eine erste Abfrage, ob ein weiterer eingehender Anruf vorliegt. Wenn ja (Punkt C), wird die Test-Verbindung sofort beendet 27.1 und wieder beim Punkt A gestartet. Wenn nicht, werden weitere Messungen durchgeführt und Messdaten aufgezeichnet 25.2, wobei auch eine vom Test-Center 4 gesendete, vordefinierte Sprachsequenz 13 empfangen werden kann, die analysiert wird, um die "downlink"-Verbindungsqualität zu bestimmen. Auch während oder zwischen diesen Messungen erfolgt im Entscheider 26.2 die nächste Abfrage, ob ein anderer eingehender Anruf vorliegt. Ist die Antwort ja, wird die Test-Verbindung wiederum sofort beendet und beim Punkt A fortgefahren. Ist die Antwort hingegen nein, muss im Entscheider 28 festgestellt werden, ob alle gewünschten Messdaten erfasst und aufgezeichnet worden sind. Falls ja, wird die Test-Verbindung abgebrochen 27.2 und beim Punkt E weitergefahren. Wenn jedoch noch nicht alle Daten erfasst worden sind, wird entweder zum Punkt D gesprungen und die Messungen fortgesetzt oder, für den Fall, dass ein Verbindungswunsch des Mobilfunktelefon-Besitzers vorliegt 29.1, die Test-Verbindung sofort unterbrochen 27.3 und zum Punkt B gesprungen.

Zurück zur Entscheidung, woher der Verbindungswunsch kommt. Falls der Entscheider 23 nämlich feststellt, dass der eingehende Anruf nicht vom Test-Center 4 stammt, wird der Anruf dem Besitzer wie gewohnt signalisiert und entgegengenommen 30. Während der Besitzer sein Gespräch führt, können wiederum die gewünschten Messungen durchgeführt und die Daten aufgezeichnet werden 25.3. Nach Beendigung des Gesprächs und dem Abbau der Sprechverbindung 31 (Punkt E) wird vom Entscheider 26.4 zum Punkt A gewechselt, wenn ein anderer Anruf vorliegt bzw. weitergefahren und eine Test-Verbindung zum Test-Center aufgebaut 32, wenn kein anderer Anruf vorliegt. Steht diese Test-Verbindung, werden die aufgezeichneten Messdaten blockweise zum Test-Center übertragen 33. Dabei wird jeweils während der Übertragung jedes Datenblocks geprüft, ob ein eingehender Anruf vorliegt 26.3. Ebenso wird nach der Übertragung jedes Datenblocks geprüft, ob ein eingehender Anruf vorliegt 26.3, ob schon alle Daten gesendet wurden 34 oder ob der Besitzer selber einen Anruf tätigen möchte 29.2. Lauten alle drei Entscheidungen "nein", wird der nächste Datenblock übertragen 33. Ist jedoch ein eingehender Anruf registriert worden 26.3, wird sofort zum Punkt C gesprungen. Sind alle Daten gesendet worden 34, wird die Test-Verbindung sofort abgebrochen 27.4 und zum Punkt B gesprungen. Wenn schliesslich der Besitzer einen Anruf tätigen möchte 29.2, wird die Test-Verbindung ebenfalls abgebrochen 27.4 und zum Punkt B gesprungen.

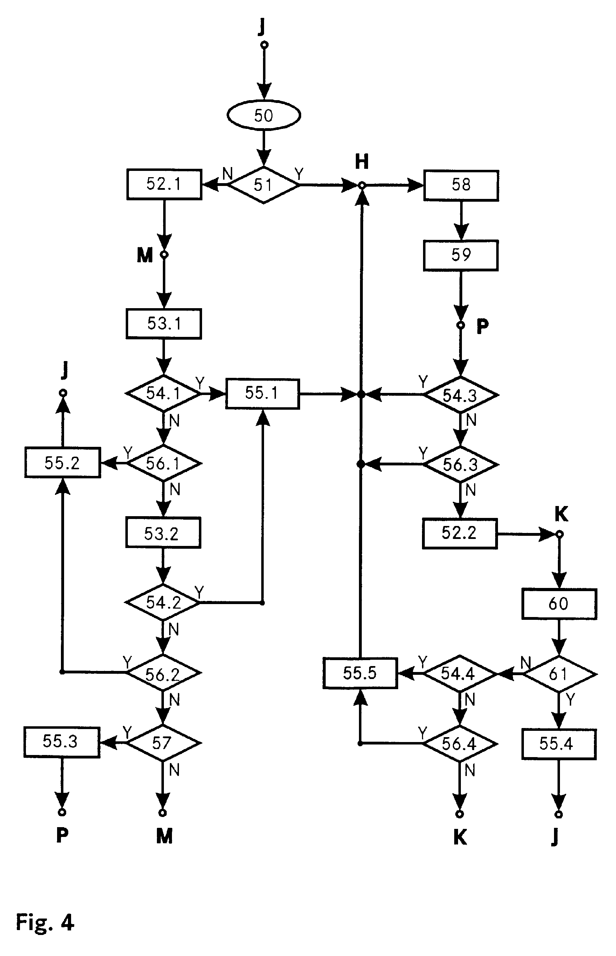

Figur 4 zeigt ein Flussdiagramm einer Management-Einheit für abgehende Test-Verbindungen 11 (also aufgebaut vom Test-Center zum Mobilfunktelefon), wie sie z.B. im Mobilfunktelefon 5.2 in der Zelle 2 des zellularen Netzwerkes 1 integriert ist. Auch in diesem Beispiel kann eine den Umständen nach geeignete Realisierungsform auf Hardware- oder Softwarebasis gewählt werden.

Ausgangspunkt ist wiederum der Zustand "idle" 50, diesmal jedoch des Mobilfunktelefons 5.2 (Punkt J). Bevor eine Test-Verbindung zum Test-Center aufgebaut werden kann, muss geprüft werden, ob nicht gerade der Besitzer des Mobilfunktelefons einen Anruf tätigen möchte oder dies bereits tut 51. Tut er dies nicht, wird die Test-Verbindung aufgebaut 52.1 (Punkt M) und anschliessend Messdaten erfasst und aufgezeichnet 53.1, wobei auch eine vordefinierte Sprachsequenz zwecks Messung der "uplink"-Verbindungsqualität zum Test-Center 4 gesandt werden kann. Auch hier wird zwischen und während den Messungen jeweils geprüft, ob ein eingehender Anruf anliegt 54.1. Wenn ja, wird die Test-Verbindung sofort abgebrochen 55.1 und zum Punkt H gewechselt und wenn nicht, wird weiter geprüft, ob der Besitzer einen Knopf des Gerätes gedrückt hat und selber einen Anruf tätigen möchte 56.1. Ist dies der Fall, wird die Test-Verbindung abgebrochen 55.2 und zum Punkt J gewechselt. Ist jedoch auch dies nicht der Fall, werden die Messungen fortgesetzt und die Daten aufgezeichnet 53.2, wobei auch eine vom Test-Center gesendete, vordefinierte Sprachsequenz 13 empfangen werden kann, die analysiert wird, um die "downlink"-Verbindungsqualität zu bestimmen. Auch während oder zwischen diesen Messungen wird geprüft, ob ein eingehender Anruf anliegt 54.2 und die Verbindung unterbrochen 55.1 und anschliessend zum Punkt H gewechselt, wenn dem so ist. Liegt hingegen kein Anruf an, wird wiederum geprüft, ob der Besitzer eine Taste des Gerätes gedrückt hat um selber einen Anruf zu tätigen 56.2, woraufhin die Verbindung unterbrochen 55.2 und zum Punkt J gewechselt wird. Ist dies aber auch diesmal nicht eingetreten, wird zum Punkt M zurückgesprungen, wenn die nächste Prüfung 57 ergibt, dass noch nicht alle Messungen durchgeführt sind. Sind hingegen alle gewünschten Messdaten vorhanden, wird die Test-Verbindung abgebaut 55.3 und zum Punkt P gesprungen.

Wurde im Entscheider 51 festgestellt, dass der Besitzer selber einen Anruf tätigen möchte, wird eine normale Sprechverbindung aufgebaut während der wiederum die gewünschten Messungen vorgenommen werden können 58. Nach Beendigung der Sprechverbindung 59 (Punkt P) wird von den Entscheidern 54.3 und 56.3 wiederum geprüft, ob ein eingehender resp. abgehender Anruf vorliegt und in beiden Fällen zum Punkt H gesprungen, wenn die Bedingung erfüllt ist. Ist keines von beidem eingetreten, wird eine Test-Verbindung zum Test-Center aufgebaut 52.2 (Punkt K) und anschliessend werden die aufgezeichneten Daten wiederum blockweise zum Test-Center 4 übermittelt 60. Auch in diesem Fall wird nach jedem gesendeten Block zuerst geprüft, ob alle Daten übermittelt worden sind 61 und die Verbindung sofort abgebaut 55.4 und zum Punkt J gewechselt, wenn dem so ist. Sind jedoch noch weitere Daten zu übermitteln, wird, bevor die Übermittlung fortgesetzt wird, ein weiteres Mal geprüft, ob ein eingehender 54.4 oder ein abgehender Anruf 56.4 vorliegt. Ist auch hier eine der beiden Bedingungen erfüllt, wird die Verbindung abgebaut 55.5 und sofort zum Punkt H gewechselt. Ist nichts dergleichen geschehen, wird die Datenübertragung fortgesetzt, indem zum Punkt K zurückgesprungen wird.

Um dem Umstand Rechnung zu tragen, dass die Übertragung von Daten über Mobilfunknetze immer mehr an Bedeutung gewinnt, sei hier noch speziell erwähnt, dass die Bestimmung der Service-Qualität natürlich nicht nur bei Sprachverbindungen, sondern auch bei Datenverbindungen wie z.B. Telefax- oder Modemverbindungen möglich ist. Zur Messung der "up-", wie auch der "downlink"-Verbindungsqualität werden hierbei nicht Sprach- sondern Datensequenzen übertragen, aus welchen sich zusätzliche Qualitätsparameter der Verbindungen herleiten lassen.

Zusammenfassend ist festzustellen, dass heute schon eine beträchtliche Zahl an Mobilfunktelefonen vorhanden ist, welche sich in Zukunft noch stark vergrössern wird. Diese Geräte stehen praktisch alle für erfindungsgemässe Test-Verbindungen zur Verfügung. Dadurch kann eine enorm hohe Messdichte erreicht werden, woraus eine Datenmenge resultiert, die es erlaubt, ein zuverlässiges Abbild des Netzes und seines Zustandes zu erstellen. Dies wiederum ermöglicht es, bei allfälligen Störungen bzw. Schwächen des Netzes schnell und gezielt mit entsprechenden Gegenmassnahmen einzugreifen.

## Patentansprüche

1. Verfahren zur Messung der Service-Qualität in Kommunikationsnetzwerken, insbesondere zellularen Mobilfunknetzen, mit einer Mehrzahl von Teilnehmern mit mindestens einem Teilnehmer-Endgerät, mittels Ermittlung und Aufzeichnung von Messdaten während einer Test-Verbindung von oder zu einem Teilnehmer-Endgerät, dadurch gekennzeichnet, dass eine Mehrzahl von multifunktionalen Teilnehmer-Endgeräten vorhanden ist, welche sowohl übliche Kommunikationsdienste für den Teilnehmer als auch Messungen der Service-Qualität im Kommunikationsnetzwerk durchführen können, und dass Test-Verbindungen ohne Eingriff des Teilnehmers automatisch aufgebaut werden, wenn sich das Teilnehmer-Endgerät im Zustand "idle" befindet.

2. Verfahren nach Anspruch 1, dadurch gekennzeichnet, dass eine Test-Verbindung in Abhängigkeit von mindestens einem der folgenden Kriterien aufgebaut wird:
- geographische Position des Teilnehmer-Endgerätes,
- Uhrzeit,
- verstrichene Zeit seit der letzten Test-Verbindung,
- Auslastung des Netzwerkes.

3. Verfahren nach Anspruch 1 oder 2, dadurch gekennzeichnet, dass die Ermittlung und die Aufzeichnung der Messdaten sofort unterbrochen und die Test-Verbindung sofort abgebaut wird, wenn der Benutzer einen Anruf erhält oder selber einen Anruf tätigen will.

4. Verfahren nach Anspruch 3, dadurch gekennzeichnet, dass Messdaten vom Teilnehmer-Endgerät aufgezeichnet und zu einem Test-Center übermittelt werden, wobei aufgezeichnete aber wegen eines Verbindungsunterbruchs noch nicht oder nicht vollständig zum Test-Center übertragene Messdaten nach dem Unterbruch zum Test-Center übertragen werden, wenn sich das Teilnehmer-Endgerät wieder im Zustand "idle" befindet.

5. Verfahren nach einem der Ansprüche 1 bis 3, dadurch gekennzeichnet, dass Messdaten vom Test-Center aufgezeichnet werden.

6. Verfahren nach einem der Ansprüche 1 bis 5, dadurch gekennzeichnet, dass die Test-Verbindung entweder vom Teilnehmer-Endgerät zu einem vordefinierten Ziel oder vom Test-Center zum Teilnehmer-Endgerät aufgebaut wird.

7. Verfahren nach Anspruch 6, dadurch gekennzeichnet, dass das Teilnehmer-Endgerät einen eingehenden Anruf des Test-Centers anhand der "calling party number" erkennt, ohne Ruf-Signalisation eine Test-Verbindung herstellt und automatisch mit der Ermittlung und der Aufzeichnung der Messdaten beginnt.

8. Verfahren nach Anspruch 6 oder 7, dadurch gekennzeichnet, dass das Teilnehmer-Endgerät vor dem Aufbau einer Test-Verbindung und mindestens einmal während einer Test-Verbindung prüft, ob eine aktive Verbindung vom oder zum Mobilfunktelefon besteht, ob der Mobilfunkteilnehmer einen Anruf erhält oder ob er selber einen Anruf tätigen will.

9. Verfahren nach einem der Ansprüche 1 bis 8, dadurch gekennzeichnet, dass die Messdaten mindestens eine der folgenden Messgrössen umfassen:
- Verbindungsaufbau erfolgreich/nicht erfolgreich,
- Signal-Feldstärke,
- Signalisierungs-Nachrichten,
- "downlink"-Verbindungsqualität (Sprachqualität),
- "uplink"-Verbindungsqualität (Sprachqualität),
- Uhrzeit,
- Fehlerhäufigkeit bzw. Fehlerwahrscheinlichkeit der übertragenen Signale,
- genaue geographische Position des Teilnehmer-Endgeräts während der Messung,
- Bitfehlerrate,
- zur Übertragung einer Datensequenz benötigte Übertragungszeit,
- effektive Übertragungsrate,
- Anzahl der wegen Übertragungsfehlern nochmals zu sendenen Datenblocks.

10. Verfahren nach einem der Ansprüche 1 bis 9, dadurch gekennzeichnet, dass die Funktionsweise des Teilnehmer-Endgeräts vor, während oder nach einer Messung vom Test-Center aus gesteuert wird, indem Steuersignale vom Test-Center ans Teilnehmer-Endgerät gesendet werden.

11. System zur Durchführung des Verfahrens nach Anspruch 1 in einem Kommunikationsnetzwerk mit mindestens einem Test-Center und mehreren, zur Ausführung üblicher Kommunikationsdienste ausgebildeten Teilnehmer-Endgeräten, dadurch gekennzeichnet, dass die genannten mehreren Teilnehmer-Endgeräte jeweils zusätzliche Mittel zur Erfassung, Aufzeichnung und Übertragung von Daten aufweisen.

12. System nach Anspruch 11, dadurch gekennzeichnet, dass die Teilnehmer-Endgeräte zusätzliche Mittel aufweisen, um bei einem eingehenden Anruf die Fälle Test-Verbindung/normale Sprechverbindung zu unterscheiden sowie Mittel zur Unterbrechung der Messung und der Test-Verbindung, wenn der Teilnehmer einen Anruf erhält oder selber einen Anruf tätigen will.
